# EUROPEAN PATENT APPLICATION

(11) **EP 4 060 511 A1**
(43) Date of publication of application: **21.09.2022**
(21) Application number: 21163361.5
(22) Date of filing: 18.03.2021
(51) Int. Cl.: G06F 16/11, G06F 16/16

(54) **SCREENSHOT MANAGEMENT SYSTEM, ELECTRONIC DEVICE, METHOD**

(71) Applicant: Vestel Elektronik Sanayi ve Ticaret A.S., 45030 Manisa (TR)
(72) Inventor: CUBUKCU, Baran, 45030 Manisa (TR)
(74) Representative: Kehl, Ascherl, Liebhoff & Ettmayr Patentanwälte Partnerschaft mbB

(57) **Abstract**

The present disclosure provides a screenshot management system (100, 200, 300) for an electronic device (450) comprising a display, the screenshot management system (100, 200, 300) comprising a screenshot recorder (101, 201, 301) configured to record a screenshot (103, 203, 303) of the content (102, 202, 302) of the display upon user request, a screenshot memory (104, 204, 304) coupled to the screenshot recorder (101, 201, 301) and configured to store the screenshots (103, 203, 303) recorded by the screenshot recorder (101, 201, 301), and a screenshot updater (105, 205, 305) configured to regularly update at least one of the screenshots (103, 203, 303) by re-recording the respective at least one screenshot (103, 203, 303) stored in the screenshot memory (104, 204, 304). Further, the present disclosure comprises an electronic device (450) and a respective method.

## Description

### TECHNICAL FIELD

The disclosure relates to a screenshot management system, and electronic device, and a respective method.

### BACKGROUND

Although applicable to any electronic device with a display, the present disclosure will mainly be described in conjunction with mobile devices, like smartphones.

In modern mobile devices like e.g., smartphones, a user may take screenshots during operation of the device. Such screenshots may later be viewed by the user and show the static content as displayed on the display of the mobile device the moment the screenshot was recorded.

Showing only static content may in situations be inadequate.

Accordingly, there is a need for improving screenshot management.

### SUMMARY

The above stated problem is solved by the features of the independent claims. It is understood, that independent claims of a claim category may be formed in analogy to the dependent claims of another claim category.

Accordingly, it is provided:
A screenshot management system for an electronic device comprising a display, the screenshot management system comprising a screenshot recorder configured to record a screenshot of the content of the display upon user request, a screenshot memory coupled to the screenshot recorder and configured to store the screenshots recorded by the screenshot recorder, and a screenshot updater configured to regularly update at least one of the screenshots by re-recording the respective at least one screenshot stored in the screenshot memory.

Further, it is provided:
An electronic device comprising a display configured to display image content, a user interface configured to receive user input, and a screenshot management system according to the preceding claims coupled to the display and the user interface.

Further, it is provided:
A method for managing screenshots in an electronic device comprising a display, the method comprising recording a screenshot of the content of the display upon user request, storing the recorded screenshots, and regularly updating at least one of the stored screenshots by re-recording the respective at least one screenshot.

The present disclosure is based on the finding, that a user may want to see updated information even when viewing screenshots that are outdated. Such information may refer to any text or number that may change in time.

For example, a user may store a screenshot of a web-page that shows the current results of a sports league, like a soccer league as a screenshot. When the user views that screenshot a week later, the content of the screenshot may be outdated.

The present disclosure, therefore, allows updating screenshots regularly. To this end, the present invention provides the screenshot management system that may be used in a respective electronic device.

The screenshot management system comprises a screenshot recorder. Such a screenshot recorder may be an entity that may be coupled to a display of the electronic device for recording screenshots. The expression "coupled to the display" in this context may refer to the screenshot recorder being enabled to access the content of the image being currently displayed on the display. In case the screenshot recorder is provided as a dedicated hardware unit, the screenshot record may be provided with access to a video memory of the electronic device or the display and may be capable of reading from that video memory. In another embodiment, the screenshot recorder may be provided as computer program comprising respective computer readable instructions that may be executed by a processor e.g., of the electronic device. In such an embodiment, the screenshot recorder may use respective program interfaces or APIs that may be provided by an operating system, a firmware, or another computer program, that is running on the electronic device, to retrieve the content of the display and store respective screenshots.

The screenshot memory may be a dedicated memory. As alternative, the screenshot memory may be provided to the screenshot management system by the electronic device e.g. via an operating system of the electronic device that allocates a respective amount of memory to the screenshot management system. It is understood, that the screenshot memory may in embodiments be a memory that is shared between the operating system of the electronic device and the screenshot management system. The screenshot memory may for example be provided as the directory in which images are stored on the electronic device. It is understood, that such a directory may be predefined in the electronic device or may be user configurable. It is further understood, that the expression "operating system" may refer to any kind of software or firmware that is executed by a processor of the electronic device and is capable of executing the screenshot management system in case that it is provided as computer program product.

The screenshot management system further provides the screenshot updater. The screenshot updater serves for regularly updating the screenshots that are recorded by the screenshot recorder. Updating in this regard refers to the screenshot updater re-recording the screenshot. The formerly stored version of the screenshot may be overwritten by the re-recorded version of the screenshot.

It is understood, that the screenshot updater may update specific screenshots in specific intervals or upon occurrence of specific conditions or trigger events, as will be explained in more detail below.

With the screenshot updater the screenshots get updated regularly. Whenever a user opens the screenshot he may see the latest version of the screenshot.

It is understood, that the screenshot management system may be provided as a separate system or entity that may be added as an addon to an electronic device. The screenshot management system may for example be provided as a dedicated hardware device or multiple hardware devices that may be integrated into the electronic device by the manufacturer of the electronic device. In another embodiment, the screenshot management system may be provided as a computer program product that may be installed onto an electronic device any time during operation of the electronic device. The manufacturer may e.g. pre-install the screenshot management system or a user may install the screenshot management system on demand. The screenshot management system may for example be provided as application that may be installed on an electronic device via a respective online program database like e.g., an app store. Such an application may be integrated with the operating system of the electronic device and use respective functions or APIs of the operating system, to record, store and update screenshots.

Further embodiments of the present disclosure are subject of the further dependent claims and of the following description, referring to the drawings.

In an embodiment, the screenshot recorder may be configured to record status information of the electronic device with the screenshots that reflects the status of the electronic device at the moment of recording the screenshot. In addition, the screenshot updater may be configured to load the recorded status information for a respective one of the screenshots that is to be updated and to update the respective screenshot based on the loaded status information.

The status information may contain any information that is required by the screenshot updater to re-record the screenshot. Such information may comprise that application that is opened when the screenshot was originally recorded by the screenshot recorder and additional information about the status of the application.

If, for example, a screenshot is taken while the user browses a web-page, the status information may comprise the application, i.e. a web-browser, and the specific address or URL of the web-page of which the screenshot was recorded. If the screenshot is taken from another application than a web-browser, the screenshot updater will open the respective application and set the application in the respective state.

In order to set applications into specific states, the screenshot updater may comprise a control interface to set the respective application into the required state or to control the respective application. It is understood, that this control interface may use functions or APIs of an operating system of the electronic device.

It is understood, that in case that the application requires a password or PIN to access the application, this information may either be stored with the status information or the user may be asked to input the required credentials to update the screenshot. It is understood, that other credentials than a password or a PIN may also be used. For example, biometric credentials like e.g., fingerprints or face recognition, may also be used.

The screenshot updater may comprise a control interface to control the electronic device or the respective application in order to recreate the situation in which the screenshot was originally recorded. The screenshot updater may for example open the respective application and configure the application according to the status information. In the example of a web-page screenshot, the screenshot updater may open the web-browser and control the web-browser to open the respective web-page again. The screenshot updater may then re-record the respective screenshot or control the screenshot recorder to update the respective screenshot.

It is understood, that the explanations presented above regarding how the screenshot recorder accesses the image data to record screenshots also apply mutatis mutandis to the screenshot updater.

The screenshot updater may in embodiments also be configured to open an application in the background i.e., without showing the application to the user, and may re-record a screenshot of the application without the user noticing.

Method for managing screenshots in an electronic device comprising a display, the method comprising:
recording a screenshot of the content of the display upon user request;
storing the recorded screenshots; and
regularly updating at least one of the stored screenshots by re-recording the respective at least one screenshot.

In a further embodiment, the screenshot management system may comprise a user interface that is coupled to the screenshot recorder and the screenshot updater and that is configured to receive user input indicating that a screenshot is to be recorded, wherein the screenshot recorder is configured to record a screenshot upon reception of the user input. In addition, the user interface may be configured to receive user input indicating that a screenshot is to be updated in the future, and wherein the screenshot updater is configured to regularly update only screenshots that are indicated by the user input to be updated.

The user may be provided via the user input to select whether a screenshot is to be updated or not. For example, when performing the input to record a screenshot, the user may be asked if the screenshot is to be updated regularly.

If the user acknowledges that the screenshot is to be updated regularly, the screenshot recorder may store this information together with the screenshot in the screenshot memory. The screenshot updater may also store the above-mentioned status information with the screenshot.

The screenshot recorder will then perform the updating of all screenshots, for which the user indicated that they are to be updated regularly.

Further, the user input may allow the user to explicitly select whether a screenshot is to be updated or not after the screenshot is already recorded and stored. If this option is given to the user, the status information may be stored in the screenshot memory for all screenshots that are recorded.

The user interface may for example be provided as a touch screen, especially as a touch screen of the electronic device. Alternatively, the user interface may be a computer program function or interface that receives user inputs from an operating system of the electronic device.

In yet another embodiment, the user interface may be configured to receive a user input on a displayed screenshot to open the application with which the screenshot was taken.

The user may for example simply click or touch the displayed screenshot. As alternative, a specific icon or button may be display together with the screenshot that a user may click or touch. If such a user input is received, the user interface may open the respective application or indicate to the operating system of the electronic device that the respective application is to be opened, which was used when the screenshot was recorded.

The user interface may also read the status information from the screenshot memory, and for example open a respective web-page in the web-browser on the electronic device.

In a further embodiment, the screenshot management system may comprise a source monitor coupled to the screenshot updater and configured to monitor data sources of screenshots for changes and provide a respective trigger signal if changes in one of the data sources are detected.

The data sources may for example comprise freely accessible data sources, like e.g. servers that are connected to the internet. Such servers may provide e.g., weather information, stock values, sports league statistics, or any other information that may be presented to the user via an application on the electronic device.

The source monitor may therefore monitor the respective data sources. It is understood, that the source monitor may be informed by the respective application or via a respective function of the operating system of the electronic device about the data source that is to be monitored for a specific one of the screenshots. The source monitor may then request the respective data from the data source for example, via http requests. If the source monitor identifies a change in the data source, it may provide the respective signal to the screenshot updater. The monitor allows quickly updating a screenshot as soon as the content of the data source changes.

It is understood, that the screenshot updater may also re-record screenshots without a notification from the source monitor. The screenshot updater may for example be configured to update screenshots in predetermined time intervals like e.g., once a day, if the source monitor is not capable of monitoring the data source for a specific screenshot.

In another embodiment, the screenshot management system may comprise a displaying controller coupled to the screenshot memory and configured to control the electronic device to display a specific screenshot.

The displaying controller is not to be misunderstood as a display controller that controls a hardware display. Instead, the displaying controller is a controller that selects a screenshot and indicates to the electronic device, that the respective screenshot is to be displayed on a display of the electronic device.

The displaying controller may for example control the electronic device to show a screenshot as a wallpaper, or a background of a home screen, or a menu background, or any other place where images may be shown in the electronic device.

A screenshot that is displayed on the display in a permanent or semi-permanent manner, may automatically be updated in the display of the electronic device whenever the screenshot is updated.

In yet another embodiment, the user interface may be configured to receive a section selection from a user for a screenshot and store the respective section selection with the screenshot in the screenshot memory, and the displaying controller may be configured to display only the user selected section when the respective screenshot is displayed.

The user interface may allow the user to select the section or part of the screenshot that is most interesting to the user. The user may be provided e.g., with the option to draw a rectangle in the screenshot to select the respective section.

When such a screenshot is then displayed to the user, only the section marked or selected by the user may be shown to the user.

In a further embodiment, the screenshot management system may comprise a screenshot aggregator coupled to the screenshot memory and configured to aggregate at least two of the screenshots.

The screenshot aggregator may receive user input, e.g. via the user interface, that indicates, which of the screenshots should be aggregated and may then aggregate the screenshots accordingly. Aggregating may refer to arranging the screenshots next to each other or to showing the screenshots one after the other in a predefined order.

It is understood, that the displaying controller may receive the aggregated screenshots and display these accordingly. In such an embodiment, the displaying controller may comprise or may be provided as a function or computer program product that controls the electronic device to display the aggregated screenshots. Such a function may also be called a widget in the terms of mobile devices.

Such a widget may for example show different screenshots arranged next to each other. For example, a user may fit screenshots into the widget and set the size of the widget on the display. In an exemplary configuration, 1/3 of the available space may be used to show a screenshot with currency rates, another 1/3 of the available space may be used to show live match result of a sports match, and another 1/3 of the available space may be used for a still image, like a family picture. It is understood, that the user may place any number and any type of screenshots, and that instead of dividing the available space, at least in one of the sections, the screenshots may be shown one after the other. Further, the user may set different update frequencies for the different sections or screenshots. The update frequency may also be the update frequency that is set for a specific screenshot, in each case.

Which such a widget, the widget sizes or the size of a single section may depend on the update frequency of the shown screenshots. For example, three screenshots may be set to be displayed in the widget, and each screenshot may take 1/3 of available space. A first screenshot may be updated very frequently, and the other screenshots are only updated with a lower frequency. In such a case, the widget may change the ratio of the screenshots that are shown and may increase the frequently updated screenshot to use half of available space and other two will use 1/4th each. The increase in size may be only temporary.

The widget may also enlarge only some e.g., the most updated parts of a screenshot, which is set to be displayed.. For example, in a price list, a brand name of shoes or the details of the shoes will usually not be updated, but price might change from time to time. The widget may with such screenshots only increase in size the section of the screenshot that has changed.

In an embodiment, the screenshot management system may comprise an alarm configured to output an alarm signal if a predefined condition is fulfilled by at least one of the screenshots.

The alarm may be configured by the user. A user may for example configure the alarm to output the alarm signal if a screenshot is updated or if a specific section of a screenshot e.g., the section showing a sports match score or a stock value, is updated.

The alarm may also comprise an image recognition function, especially an optical character recognition or OCR function. With such an alarm, the user may also set specific conditions, that include verifying if a recognized text is equal or not to a predefined text or of a number is equal, higher or lower than a predetermined number.

The alarm signal may be e.g., a ringtone or a highlight on the display. A highlight might be provided by providing the displayed screenshot with a different colored frame to capture the user's attention.

If the user is using another application on the mobile device at the time of the alarm signal an alternative way of informing the user may be applied, like showing a transparent picture on top of the application being used at that time.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of a screenshot management system according to the present disclosure;
Figure 2 shows a block diagram of another embodiment of a screenshot management system according to the present disclosure;
Figure 3 shows a block diagram of another embodiment of a screenshot management system according to the present disclosure;
Figure 4 shows a block diagram of an embodiment of an electronic device according to the present disclosure; and
Figure 5 shows a flow diagram of an embodiment of a method according to the present disclosure.

In the figures like reference signs denote like elements unless stated otherwise.

### DETAILED DESCRIPTION OF THE DRAWINGS

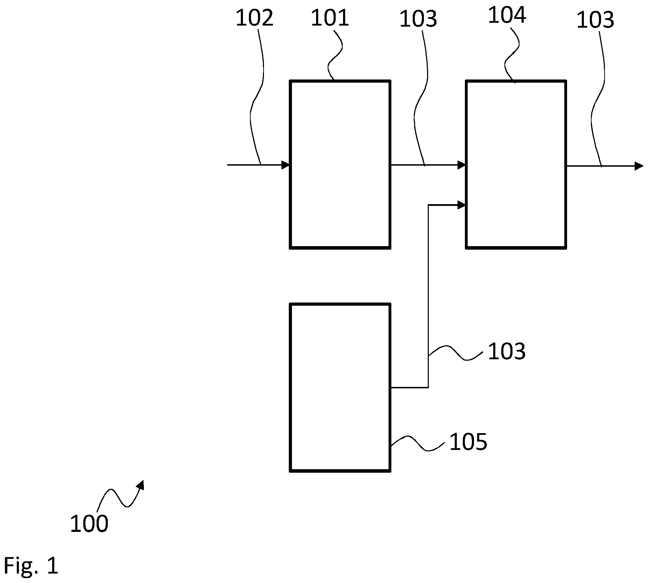

Figure 1 shows a block diagram of a screenshot management system 100 that may be used with an electronic device to manage screenshots in the electronic device.

The screenshot management system 100 comprises a screenshot recorder 101 that is coupled to a screenshot memory 104. The screenshot management system 100 further comprises a screenshot updater 105 that is also coupled to the screenshot memory 104.

The screenshot recorder 101 records a screenshot 103 based on the content 102 of a display 451 upon user request and provides the screenshot 103 to the screenshot memory 104. The screenshot memory 104 then stores the screenshots 103 for displaying and viewing by a user.

After screenshots 103 are stored, the screenshot updater 105 regularly updates at least one of the screenshots 103 by re-recording the respective at least one of the screenshots 103 stored in the screenshot memory 104.

In order to allow the screenshot updater 105 to identify the screenshots 103 that are to be updated, the screenshot recorder 101 may record status information of the electronic device with the screenshots 103. The status information may reflect the status of the electronic device at the moment of recording the respective screenshot 103. The screenshot updater 105 may then load the recorded status information for a respective one of the screenshots 103 that is to be updated and may then update the respective screenshot 103 based on the loaded status information.

The status information may for example comprise information about the state of the electronic device at the moment the respective screenshot was taken. The screenshot updater 105 may load the status information and set the electronic device in the respective state and e.g., open the respective application and set the application to display the information that was displayed when the screenshot was taken. If, for example, the application is a web-browser, the screenshot updater 105 may instruct the web-browser to open the respective web-site.

As already indicated above, the screenshot management system 100 may be installed as computer program product in the electronic device and may user functions or APIs of an operating system for interacting with the electronic device. It is understood, that such functions and/or APIs may be used for any feature described herein that involves controlling elements outside of the screenshot management system 100 and all other embodiments of the screenshot management system described herein. The screenshot management system 100 may therefore in any embodiment be provided as a separate entity apart from the electronic device and may be installed in or on the electronic device.

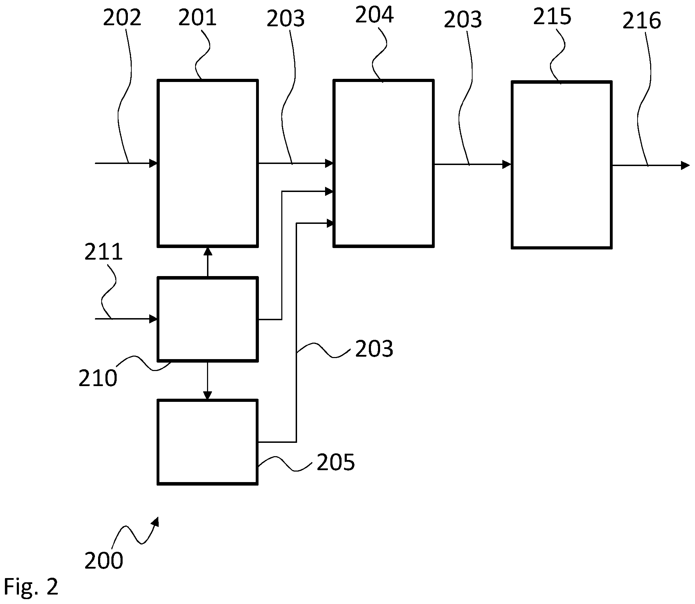

Figure 2 shows a block diagram of another screenshot management system 200. The screenshot management system 200 is based on the screenshot management system 100. Therefore, the screenshot management system 200 comprises a screenshot recorder 201 that is coupled to a screenshot memory 204. The screenshot management system 200 further comprises a screenshot updater 205 that is also coupled to the screenshot memory 204. The screenshot management system 200 further comprises a user interface 210 that is coupled to the screenshot recorder 201 and the screenshot updater 205. The screenshot management system 200 also comprises a displaying controller 215 coupled to the screenshot memory 204.

The user interface 210 may receive user input 211 indicating that a screenshot 203 is to be recorded and may provide said user input 211 to the screenshot recorder 201. The screenshot recorder 201 may then record a screenshot 203 upon reception of the user input 211.

The user interface 210 may also receive user input 211 indicating that a recorded screenshot 203 is to be updated regularly. The screenshot updater 205 may then regularly update only screenshots 203 that are indicated by the user input 211 to be updated. In the screenshot management system 200, the user interface 210 is coupled to the screenshot updater 205 and the screenshot memory 204. The user interface 210 may therefore either indicate to the screenshot updater 205 that a screenshots 203 is to be updated, or may store this information together with other status information in the screenshot memory 204.

The displaying controller 215 serves for controlling the electronic device to display a specific screenshot 203. In combination with the user interface 210 the displaying controller 215 may also serve for selecting specific regions or sections of screenshots 203 for displaying. The user interface 210 may for example receive a section selection from a user for a screenshot 203 that characterizes a section of the respective screenshot 203. The respective section selection may be stored with the screenshot 203. The displaying controller 215 may then display only the user selected section when the respective screenshot 203 is displayed.

When it is stated, that the displaying controller 215 displays or controls the electronic device to display, it is understood that the displaying controller 215 may output respective image display data 216. The image display data 216 may for example comprise image data that may be shown or may indicate which image i.e., screenshot 203, is to be shown and which section should be shown.

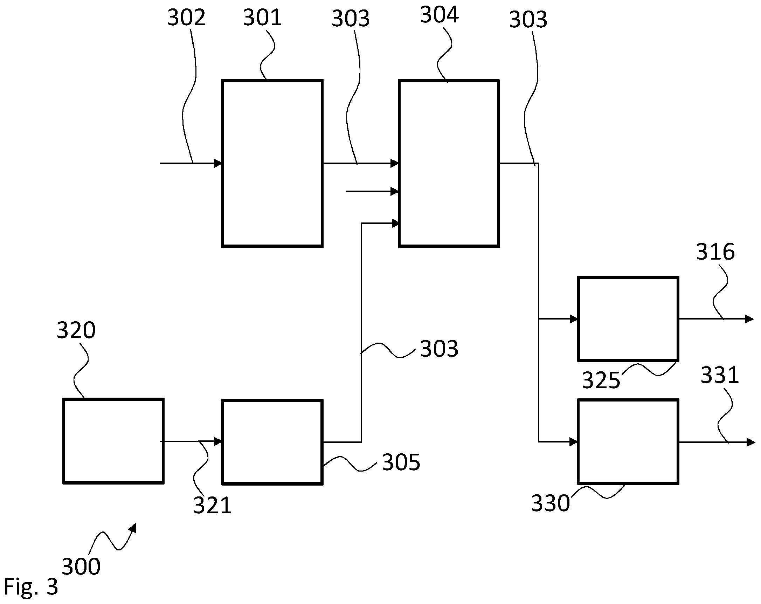

Figure 3 shows a block diagram of another screenshot management system 300. The screenshot management system 300 is based on the screenshot management system 100. Therefore, the screenshot management system 300 comprises a screenshot recorder 301 that is coupled to a screenshot memory 304. The screenshot management system 300 further comprises a screenshot updater 305 that is also coupled to the screenshot memory 304.

The screenshot management system 300 further comprises a screenshot aggregator 325 and an alarm 330 that is coupled to the screenshot memory 304. Further, the screenshot management system 300 comprises a source monitor 320 that is coupled to the screenshot updater 305.

The screenshot aggregator 325 may aggregate at least two of the screenshots 303 and output respective image display data 316 based on respective user input. The alarm 330 may output an alarm signal 331 if a predefined condition is fulfilled by at least one of the screenshots 303.

The source monitor 320 monitors data sources of screenshots 303 for changes and provides a respective trigger signal 321 if changes in one of the data sources are detected. A data source may e.g. be a web-server that provides a web-site as html file, or any other data source like e.g. server that are accessible via a network, or even applications that are running on the electronic device.

It is understood, that the above-explained embodiments of the screenshot management system are exemplary only and that the single features of the shown embodiments, may be freely combined into new embodiments. In an embodiment, the screenshot management system may for example comprise the user interface and the screenshot aggregator or the alarm. Such an embodiment may comprise the source monitor, which is however not mandatory. In another embodiment, the screenshot management system 100 may be provided with at least one of the user input, the displaying controller, the source monitor, the screenshot aggregator, and the alarm.

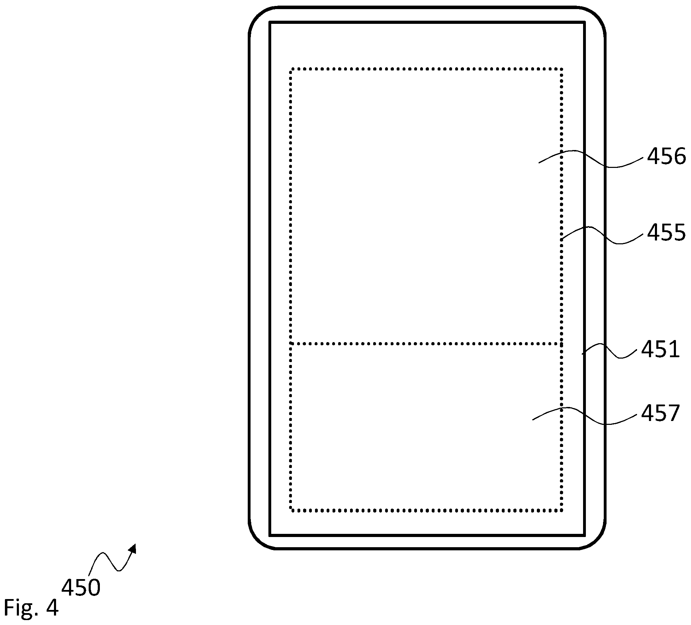

Figure 4 shows a block diagram of an electronic device 450 with a display 451 and a screenshot management system (not separately shown).

As an example, in the display 451 a widget is shown, which may be the implementation of the displaying controller or may be part of or coupled to the displaying controller of the screenshot management system.

The widget may for example be used as a so called live wallpaper i.e., as an application that shows changing images in the background of the display.

The widget comprises two sections 456, 457. In an embodiment, a user may select the screenshots to be shown in the sections 456, 457. Further, the sections 456, 457 may have the same size and a user may change the size of the sections 456, 457 manually, e.g. by dragging the separating line between the sections 456, 457 with a finger. Alternatively, the displaying controller may set the size of the sections 456, 457 based on stored status information.

It is understood, that any other number of sections is also possible.

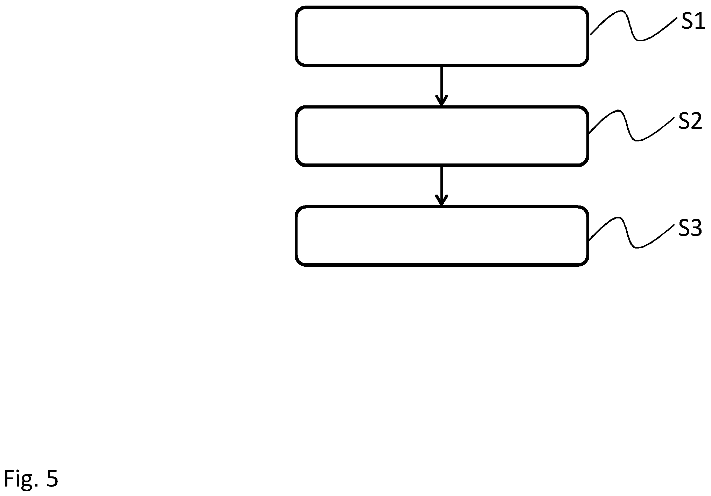

For sake of clarity in the following description of the method-based Fig. 5 the reference signs used above in the description of apparatus based Figs. 1 - 4 will be maintained.

Figure 5 shows a flow diagram of an embodiment of a method for managing screenshots 103, 203, 303 in an electronic device 450 comprising a display 451.

The method comprises recording S1 a screenshot 103, 203, 303 of the content 102, 202, 302 of the display451 upon user request, storing S2 the recorded screenshots 103, 203, 303, and regularly S3 updating at least one of the stored screenshots 103, 203, 303 by re-recording the respective at least one screenshot 103, 203, 303.

Recording the screenshots 103, 203, 303 may comprise recording status information of the electronic device 450 with the screenshots 103, 203, 303 that reflects the status of the electronic device 450 at the moment of recording the screenshot 103, 203, 303. Updating may then comprise loading the recorded status information for a respective one of the screenshots 103, 203, 303 that is to be updated and to update the respective screenshot 103, 203, 303 based on the loaded status information.

The method may further comprise receiving user input 211 indicating that a screenshot 103, 203, 303 is to be recorded, wherein recording comprises recording a screenshot 103, 203, 303 upon reception of the user input 211. Further, the method may comprise receiving user input 211 indicating that a recorded screenshot 103, 203, 303 is to be updated in the future, wherein updating comprises regularly updating only screenshots 103, 203, 303 that are indicated by the user input 211 to be updated.

The method may also comprise receiving a user input 211 on a displayed screenshot 103, 203, 303 and opening the application with which the screenshot 103, 203, 303 was taken.

In an embodiment, at least two of the screenshots 103, 203, 303 may be aggregated for displaying of the screenshots 103, 203, 303.

The method may also comprise monitoring data sources of screenshots 103, 203, 303 for changes and providing a respective trigger signal 321 for updating the respective screenshot 103, 203, 303 if changes in one of the data sources are detected.

Further an alarm signal 331 may be output if a predefined condition is fulfilled by at least one of the screenshots 103, 203, 303.

In an embodiment, the method may comprise receiving a section selection from a user for a screenshot 103, 203, 303 and storing the respective section selection with the screenshot 103, 203, 303, wherein when displaying the respective screenshot 103, 203, 303 only the user selected section 456, 457 may be displayed.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS

- 100, 200, 300: screenshot management system
- 101, 201, 301: screenshot recorder
- 102, 202, 302: content
- 103, 203, 303: screenshot
- 104, 204, 304: screenshot memory
- 105, 205, 305: screenshot updater

- 210: user interface
- 211: user input
- 215: displaying controller
- 216, 316: image display data

- 320: source monitor
- 321: trigger signal
- 325: screenshot aggregator
- 330: alarm
- 331: alarm signal

- 450: electronic device
- 451: display
- 455: widget
- 456, 457: section

- S1, S2, S3: method steps

## Claims

1. Screenshot management system (100, 200, 300) for an electronic device (450) comprising a display (451), the screenshot management system (100, 200, 300) comprising:
a screenshot recorder (101, 201, 301) configured to record a screenshot (103, 203, 303) of the content (102, 202, 302) of the display (451) upon user request;
a screenshot memory (104, 204, 304) coupled to the screenshot recorder (101, 201, 301) and configured to store the screenshots (103, 203, 303) recorded by the screenshot recorder (101, 201, 301); and
a screenshot updater (105, 205, 305) configured to regularly update at least one of the screenshots (103, 203, 303) by re-recording the respective at least one screenshot (103, 203, 303) stored in the screenshot memory (104, 204, 304).

2. Screenshot management system (100, 200, 300) according to claim 1, wherein the screenshot recorder (101, 201, 301) is configured to record status information of the electronic device (450) with the screenshots (103, 203, 303) that reflects the status of the electronic device (450) at the moment of recording the respective screenshot (103, 203, 303); and
wherein the screenshot updater (105, 205, 305) is configured to load the recorded status information for a respective one of the screenshots (103, 203, 303) that is to be updated and to update the respective screenshot (103, 203, 303) based on the loaded status information.

3. Screenshot management system (100, 200, 300) according to any one of the preceding claims, comprising a user interface (210) that is coupled to the screenshot recorder (101, 201, 301) and the screenshot updater (105, 205, 305) and that is configured to receive user input (211) indicating that a screenshot (103, 203, 303) is to be recorded, wherein the screenshot recorder (101, 201, 301) is configured to record a screenshot (103, 203, 303) upon reception of the user input (211); and
wherein the user interface (210) is configured to receive user input (211) indicating that a recorded screenshot (103, 203, 303) is to be updated in the future, wherein the screenshot updater (105, 205, 305) is configured to regularly update only screenshots (103, 203, 303) that are indicated by the user input (211) to be updated.

4. Screenshot management system (100, 200, 300) according to claim 3, wherein the user interface (210) is configured to receive a user input (211) on a displayed screenshot (103, 203, 303) and to open the application with which the screenshot was taken.

5. Screenshot management system (100, 200, 300) according to any one of the preceding claims, comprising a source monitor (320) coupled to the screenshot updater (105, 205, 305) and configured to monitor data sources of screenshots (103, 203, 303) for changes and provide a respective trigger signal (321) if changes in one of the data sources are detected.

6. Screenshot management system (100, 200, 300) according to any one of the preceding claims, comprising a displaying controller (215) coupled to the screenshot memory (104, 204, 304) and configured to control the electronic device (450) to display a specific screenshot (103, 203, 303).

7. Screenshot management system (100, 200, 300) according to claims 3 and 6,
wherein the user interface (210) is configured to receive a section selection from a user for a screenshot (103, 203, 303) and to store the respective section selection with the screenshot (103, 203, 303) in the screenshot memory (104, 204, 304); and
wherein the displaying controller (215) is configured to display only the user selected section (456, 457) when the respective screenshot (103, 203, 303) is displayed.

8. Screenshot management system (100, 200, 300) according to any one of the preceding claims, comprising a screenshot aggregator (325) coupled to the screenshot memory (104, 204, 304) and configured to aggregate at least two of the screenshots (103, 203, 303).

9. Screenshot management system (100, 200, 300) according to any one of the preceding claims, comprising an alarm (330) configured to output an alarm signal (331) if a predefined condition is fulfilled by at least one of the screenshots (103, 203, 303).

10. Electronic device (450) comprising:
a display (451) configured to display image content (102, 202, 302);
a user interface (210) configured to receive user input (211); and
a screenshot management system (100, 200, 300) according to the preceding claims coupled to the display (451) and the user interface (210).

11. Method for managing screenshots (103, 203, 303) in an electronic device (450) comprising a display (451), the method comprising:
recording (S1) a screenshot (103, 203, 303) of the content (102, 202, 302) of the display(451) upon user request;
storing (S2) the recorded screenshots (103, 203, 303); and
regularly (S3) updating at least one of the stored screenshots (103, 203, 303) by re-recording the respective at least one screenshot (103, 203, 303).

12. Method according to claim 11, wherein recording the screenshots (103, 203, 303) comprises recording status information of the electronic device (450) with the screenshots (103, 203, 303) that reflects the status of the electronic device (450) at the moment of recording the screenshot (103, 203, 303); and
wherein updating comprises loading the recorded status information for a respective one of the screenshots (103, 203, 303) that is to be updated and to update the respective screenshot (103, 203, 303) based on the loaded status information.

13. Method according to any one of the preceding claims 11 to 12, comprising receiving user input (211) indicating that a screenshot (103, 203, 303) is to be recorded, wherein recording comprises recording a screenshot (103, 203, 303) upon reception of the user input (211); and
comprising receiving user input (211) indicating that a recorded screenshot (103, 203, 303) is to be updated in the future, wherein updating comprises regularly updating only screenshots (103, 203, 303) that are indicated by the user input (211) to be updated; and/or
comprising receiving a user input (211) on a displayed screenshot (103, 203, 303) and opening the application with which the screenshot (103, 203, 303) was taken; and/or
comprising aggregating at least two of the screenshots (103, 203, 303) for displaying of the screenshots (103, 203, 303).

14. Method according to any one of the preceding claims 11 to 13, comprising monitoring data sources of screenshots (103, 203, 303) for changes and providing a respective trigger signal (321) for updating the respective screenshot (103, 203, 303) if changes in one of the data sources are detected; and/or
comprising outputting an alarm signal (331) if a predefined condition is fulfilled by at least one of the screenshots (103, 203, 303).

15. Method according to any one of the preceding claims 11 to 14, comprising receiving a section selection from a user for a screenshot (103, 203, 303) and storing the respective section selection with the screenshot (103, 203, 303), wherein when displaying the respective screenshot (103, 203, 303) only the user selected section (456, 457) is displayed.
